# EUROPEAN PATENT APPLICATION

(11) **EP 4 818 222 A1**
(43) Date of publication of application: **07.10.2026**
(21) Application number: 25745069.2
(22) Date of filing: 21.01.2025
(51) Int. Cl.: C08F 297/04, B29B 9/06, B29B 9/12, C08L 53/02

(54) **PELLET, FILM, AND METHOD FOR PRODUCING PELLET**

(30) Priority: 24.01.2024 JP 2024009010
(71) Applicant: Denka Company Limited, Tokyo 103-8338 (JP)
(72) Inventor: NAKAMURA, Yuya, Tokyo 103-8338 (JP); SAWASATO, Tadashi, Tokyo 103-8338 (JP)
(74) Representative: Gulde & Partner
(86) International application number: PCT/JP2025/001782
(87) International publication number: WO 2025/159085

(57) **Abstract**

Provided is a pellet comprising a block copolymer composition, the pellet exhibiting few fish eyes when molded into a film and having excellent tensile elongation.

According to the present invention, there is provided a pellet comprising a block copolymer composition, wherein the block copolymer composition contains 95 mass% or more of a linear block copolymer mainly comprising a vinyl aromatic monomer unit and a conjugated diene monomer unit, a content of the conjugated diene monomer unit is 12 to 27 mass% when the total amount of the vinyl aromatic monomer unit and the conjugated diene monomer unit in the block copolymer composition is taken as 100 mass%, in gel permeation chromatography measurement of the block copolymer composition in terms of polystyrene-equivalent molecular weight, a main peak is defined as a peak having the highest peak-top molecular weight among peaks each having an area ratio of 20% or more relative to the total peak area, the peak-top molecular weight of the main peak is 150,000 to 300,000, and a total area of a peak portion included in a range corresponding to 1.8 to 2.2 times the peak-top molecular weight of the main peak is less than 5% of an area of the main peak.

## Description

### Technical Field

The present invention relates to a pellet, a film, and a method for producing a pellet.

### Background Art

Styrene-butadiene block copolymer compositions are widely used in shrink film applications because of their excellent shrinkage properties.

### Citation List

### Patent Literature

[Patent Literature 1] JP-A-11-158241

### Summary of Invention

### Technical Problem

Characteristics required for shrink films include a good thermal shrinkage ratio, high tensile elongation, and few foreign substances (fish eyes). One cause of fish eyes is considered to be gel-like foreign substances derived mainly from butadiene-derived structural units, and, in general, the lower the butadiene content, the less likely fish eyes are to occur. Further, when the molecular weight is too high, gelation tends to occur easily, and fish eyes are therefore likely to occur. However, when the butadiene content is too low or the molecular weight is too low, tensile elongation decreases.

In view of the above circumstances, an object of the present invention is to provide a pellet comprising a block copolymer composition, the pellet exhibiting few fish eyes when molded into a film and having excellent tensile elongation.

### Solution to Problem

The present inventors have conducted intensive studies to solve the above problems and, as a result, have found that the above problems can be solved by using a specific linear block copolymer in a specific amount or more and by satisfying specific conditions for molecular weight and peak area in GPC measurement, thereby completing the present invention.

The following inventions are provided.
[1] A pellet comprising a block copolymer composition, wherein:
   the block copolymer composition contains 95 mass% or more of a linear block copolymer mainly comprising a vinyl aromatic monomer unit and a conjugated diene monomer unit;
   a content of the conjugated diene monomer unit is 12 to 27 mass% when the total amount of the vinyl aromatic monomer unit and the conjugated diene monomer unit in the block copolymer composition is taken as 100 mass%;
   in gel permeation chromatography measurement of the block copolymer composition in terms of polystyrene-equivalent molecular weight, a main peak is defined as a peak having the highest peak-top molecular weight among peaks each having an area ratio of 20% or more relative to the total peak area;
   the peak-top molecular weight of the main peak is 150,000 to 300,000; and
   a total area of a peak portion included in a range corresponding to a molecular weight of 1.8 times to 2.2 times the peak-top molecular weight of the main peak is less than 5% of an area of the main peak.
[2] The pellet of [1], wherein the block copolymer composition contains two or more kinds of the linear block copolymer.
[3] A method for producing the pellet of [1] or [2], comprising:
   a polymerization step; and
   a pelletization step,
   wherein
   in the polymerization step, a monomer raw material containing a vinyl aromatic monomer and a conjugated diene monomer is polymerized to obtain a polymerization solution containing the linear block copolymer;
   in the pelletization step, the polymerization solution is pelletized by a devolatilizing extrusion method; and
   when a resin temperature at an extruder outlet in the pelletization step is defined as T (°C), T satisfies Formula (1): $T \leq - 0.0129 \times {B}^{∧} 2 - 0.35 \times B + 257$ (1)
   where B is the content (mass%) of the conjugated diene monomer unit when the total amount of the vinyl aromatic monomer unit and the conjugated diene monomer unit in the block copolymer composition is taken as 100 mass%.
[4] A film which is a molded article formed from a raw material containing the pellet of [1] or [2].

### Description of Embodiments

Hereinafter, embodiments of the present invention will be described. Various features disclosed in the embodiments described below can be combined with each other. In addition, each feature may independently constitute an invention. Furthermore, among the elements described in the following embodiments, elements that are not defined in the claims are optional and may be omitted. Any number of zeros (for example, one or two zeros) may be added to the end of the numerical values disclosed in the following description. For example, one or two zeros may be added after "1.4" to obtain "1.40" or "1.400".

### 1. Pellet

A pellet according to one embodiment of the present invention is a pellet comprising a block copolymer composition. The pellet can be used as a raw material (or part of a raw material) for films and sheets such as heat-shrinkable films, and various other molded articles.

### <Block Copolymer Composition>

The block copolymer composition contains 95 mass% or more, preferably 98 to 100 mass%, and more preferably (substantially) 100 mass% of a linear block copolymer A mainly comprising a vinyl aromatic monomer unit and a conjugated diene monomer unit. Specifically, the content of the linear block copolymer A is, for example, 95, 96, 97, 98, 99, or 100 mass%, and may be within a range between any two of the numerical values exemplified herein. In addition, the block copolymer composition contains 95 mass% or more, preferably 98 to 100 mass%, and more preferably (substantially) 100 mass% of the linear block copolymer A, based on 100 mass% of the total amount of polymers contained in the composition.

The linear block copolymer A contains, in total, for example, 98 mass% or more, and preferably (substantially) 100 mass%, of the vinyl aromatic monomer unit and the conjugated diene monomer unit, when the total amount of monomer units (structural units) contained in the linear block copolymer A is taken as 100 mass%.

The linear block copolymer A is a copolymer having a block structure. The block structure is formed in a linear configuration. A block copolymer having a vinyl aromatic monomer unit and a conjugated diene monomer unit may be obtained, for example, by a living anionic polymerization reaction in an organic solvent using an organolithium compound or the like as a polymerization initiator. In living anionic polymerization, almost the entire amount of the vinyl aromatic monomer and the conjugated diene monomer subjected to the polymerization reaction can be converted into a polymer, and thus a block copolymer having a desired primary structure can be obtained by changing the amount of these monomers to be added and the order of addition thereof.

The linear block copolymer A has a vinyl aromatic block (S), and one or more blocks selected from the group consisting of a conjugated diene block (B) and a copolymer block (S/B).

The linear block copolymer A has, for example, the following block structures:
(S)-(S/B)-(S/B)
(S)-(S/B)
(S)-(S/B)-(S)
(S)-(S/B)-(B)-(S)
(S)-(B)-(S)

The vinyl aromatic block (S) contains more than 98 mass%, more preferably 99 mass% or more, and preferably 100 mass% of the vinyl aromatic monomer unit, when the total mass of monomer units contained in the block is taken as 100 mass%. The vinyl aromatic block (S) may be substantially composed only of the vinyl aromatic monomer unit.

The conjugated diene block (B) contains more than 98 mass%, more preferably 99 mass% or more, and preferably 100 mass% of the conjugated diene monomer unit, when the total mass of monomer units contained in the block is taken as 100 mass%. The conjugated diene block (B) may be substantially composed only of the conjugated diene monomer unit.

The copolymer block (S/B) is a block containing the vinyl aromatic monomer unit and the conjugated diene monomer unit. The copolymer block (S/B) contains 2 to 98 mass%, preferably 5 to 80 mass%, and more preferably 7 to 60 mass% of the conjugated diene monomer unit, when the total mass of monomer units contained in the block is taken as 100 mass%. The copolymer block (S/B) may be a tapered type in which the composition of the vinyl aromatic monomer unit and the conjugated diene monomer unit changes continuously, or a random type in which the composition of the vinyl aromatic monomer unit and the conjugated diene monomer unit is substantially constant.

The vinyl aromatic monomer unit is a unit derived from the vinyl aromatic monomer used for the polymerization of the linear block copolymer A. The vinyl aromatic monomer is a monomer in which a vinyl group is bonded to an aromatic ring. Examples of the vinyl aromatic monomer include vinyl aromatic monomers such as styrene, o-methylstyrene, p-methylstyrene, p-tert-butylstyrene, 2,4-dimethylstyrene, 2,5-dimethylstyrene, α-methylstyrene, vinylnaphthalene, and vinylanthracene. The vinyl aromatic monomer is preferably styrene. These monomers may be used alone or in combination of two or more thereof.

The conjugated diene monomer unit is a unit derived from the conjugated diene monomer used for the polymerization of the linear block copolymer A. The conjugated diene monomer is a monomer having a conjugated chemical structure represented by C=C-C=C. Examples of the conjugated diene monomer include 1,3-butadiene, 2-methyl-1,3-butadiene (isoprene), 2,3-dimethyl-1,3-butadiene, 1,3-pentadiene, and 1,3-hexadiene. The conjugated diene monomer is preferably 1,3-butadiene. These monomers may be used alone or in combination of two or more thereof.

In the linear block copolymer A, a content of the conjugated diene monomer unit is preferably 6 to 45 mass% when the total mass of monomer units contained in the linear block copolymer A is taken as 100 mass%. When such a range is satisfied, both good tensile elongation and a low level of fish eyes are likely to be achieved when molded into a film. Specifically, the content of the conjugated diene monomer unit is, for example, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, or 45 mass%, and may be within a range between any two of the numerical values exemplified herein.

The linear block copolymer A may have a monomer unit (other monomer unit) derived from another monomer copolymerizable with the vinyl aromatic monomer and the conjugated diene monomer, other than the vinyl aromatic monomer and the conjugated diene monomer.
In the linear block copolymer A, a content of the other monomer unit is, for example, 0 to 2 mass%, and preferably 0 mass%, when the total mass of monomer units contained in the linear block copolymer A is taken as 100 mass%.

A content of the conjugated diene monomer unit is 12 to 27 mass%, and preferably 15 to 25 mass%, when the total amount of the vinyl aromatic monomer unit and the conjugated diene monomer unit in the block copolymer composition is taken as 100 mass%. In the block copolymer composition, the vinyl aromatic monomer unit and the conjugated diene monomer unit are contained as structural units constituting a block copolymer such as the linear block copolymer A.
When the block copolymer composition contains two or more kinds of block copolymers, the content of the monomer units is calculated based on the total of each monomer unit in these block copolymers. When such a range is satisfied, few fish eyes occur and excellent tensile elongation is obtained when molded into a film. In particular, by setting the content of the conjugated diene monomer unit to be equal to or less than the upper limit, it is possible to suppress the generation of gel-like foreign substances resulting from thermal crosslinking of structural units derived from the conjugated diene monomer. Specifically, the content of the conjugated diene monomer unit is, for example, 12, 13, 14, 15, 16, 17, 18, 19, 20, 21, 22, 23, 24, 25, 26, or 27 mass%, and may be within a range between any two of the numerical values exemplified herein.

The content of the conjugated diene monomer unit is preferably 12 to 27 mass%, and more preferably 15 to 25 mass%, when the total amount of monomer units contained in each polymer in the block copolymer composition is taken as 100 mass%. Specifically, the content of the conjugated diene monomer unit is, for example, 12, 13, 14, 15, 16, 17, 18, 19, 20, 21, 22, 23, 24, 25, 26, or 27 mass%, and may be within a range between any two of the numerical values exemplified herein.

Note that the content of the conjugated diene monomer unit can be calculated from the charged amounts of the vinyl aromatic monomer and the conjugated diene monomer when producing each block copolymer, or may be calculated using a known halogen addition method. As a general measurement example of the halogen addition method, after dissolving the sample in a solvent capable of completely dissolving the sample, an excess amount of an iodine monochloride/acetic acid solution is added and allowed to react sufficiently, a potassium iodide solution is added, and titration is performed with a sodium thiosulfate/ethanol solution. The content of the conjugated diene monomer unit is calculated from the amount of double bonds obtained by the above method. Regarding the content of the vinyl aromatic monomer unit, a value obtained by subtracting the content of the conjugated diene monomer unit from the total amount of the sample is calculated as the content of the vinyl aromatic monomer unit.

The block copolymer composition may contain two or more kinds of the linear block copolymer A that differ in monomer unit composition, molecular weight, or the like. In addition, the block copolymer composition may contain a polymer other than the linear block copolymer A.

In gel permeation chromatography (GPC) measurement of the block copolymer composition in terms of polystyrene-equivalent molecular weight, when a main peak is defined as a peak having the highest peak-top molecular weight among peaks each having an area ratio of 20% or more relative to the total peak area, the peak-top molecular weight of the main peak is 150,000 to 300,000, and preferably 180,000 to 250,000. When such a range is satisfied, excellent tensile elongation is obtained when molded into a film. In particular, when the molecular weight is too high, thermal crosslinking is likely to occur due to shear heat generation, and gelation may easily occur with a smaller number of crosslinking events. Specifically, the peak-top molecular weight of the main peak is, for example, 150,000, 155,000, 160,000, 165,000, 170,000, 175,000, 180,000, 185,000, 190,000, 195,000, 200,000, 205,000, 210,000, 215,000, 220,000, 225,000, 230,000, 235,000, 240,000, 245,000, 250,000, 255,000, 260,000, 265,000, 270,000, 275,000, 280,000, 285,000, 290,000, 295,000, or 300,000, and may be within a range between any two of the numerical values exemplified herein.

In one embodiment, a total area of a peak portion included in a range corresponding to a molecular weight of 1.8 times to 2.2 times the peak-top molecular weight of the main peak may be less than 5% of an area of the main peak, preferably less than 4%, and more preferably less than 3%. Here, "a total area of a peak portion included in a range corresponding to a molecular weight of 1.8 times to 2.2 times the peak-top molecular weight of the main peak" means that, regardless of whether the peak top is within the range corresponding to a molecular weight of 1.8 times to 2.2 times, if even part of a peak is included in the range, the area of that part of the peak is included in the total area. When the entire peak is included in the range, the area of the entire peak is included in the total area.

When such a range is satisfied, few fish eyes occur when molded into a film. In the range of 1.8 times to 2.2 times the peak-top molecular weight of the main peak, a dimer of a component corresponding to the main peak is mainly present. Note that the area of the component having a peak top in the range of 1.8 times to 2.2 times can be controlled, for example, by molding conditions such as the resin temperature during molding of the pellet. Specifically, the ratio of the above area to the area of the main peak is, for example, 0, 0.5, 1.0, 1.5, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.5, or 4.9%, and may be within a range between any two of the numerical values exemplified herein.

The method for producing the linear block copolymer A is not particularly limited, but the linear block copolymer A may be obtained, for example, by a living anionic polymerization reaction of a monomer raw material containing a vinyl aromatic monomer and a conjugated diene monomer in an organic solvent, using an organolithium compound as a polymerization initiator.

Examples of the organic solvent include aliphatic hydrocarbons such as butane, pentane, hexane, isopentane, heptane, octane, and isooctane; alicyclic hydrocarbons such as cyclopentane, methylcyclopentane, cyclohexane, methylcyclohexane, and ethylcyclohexane; and aromatic hydrocarbons such as benzene, toluene, ethylbenzene, and xylene. A particularly preferred organic solvent is cyclohexane.

The organolithium compound is a compound in which one or more lithium atoms are bonded to other atoms in the molecule. Examples of the organolithium compound include monofunctional organolithium compounds such as ethyllithium, n-propyllithium, isopropyllithium, n-butyllithium, sec-butyllithium, and tert-butyllithium, and polyfunctional organolithium compounds such as hexamethylenedilithium, butadienyldilithium, and isoprenyldilithium. A particularly preferred organolithium compound is n-butyllithium.

In living anionic polymerization, a block copolymer having a desired primary structure can be obtained by changing the amount and method of addition of the monomer raw material. For example, the molecular weight can be adjusted by the ratio of the organolithium compound to the monomer raw material, and the ratio of the vinyl aromatic monomer unit to the conjugated diene monomer unit in each block chain can be controlled by the addition method, such as the order of addition and a divided addition method.

The block copolymer thus obtained is deactivated by adding a polymerization terminator such as water, alcohol, or carbon dioxide in an amount sufficient to deactivate active chain ends. As a method for recovering the copolymer from the obtained block copolymer solution (polymerization solution), any method may be employed, such as (A) a method of precipitating the copolymer with a poor solvent such as methanol, (B) a method of evaporating the solvent with a heating roll or the like to precipitate the copolymer (drum dryer method), (C) a method of concentrating the solution with a concentrator and then removing the solvent with a vented extruder (devolatilizing extrusion method), and (D) a method of dispersing the solution in water, blowing steam thereinto, and removing the solvent by heating to recover the copolymer (steam stripping method). The devolatilizing extrusion method is particularly preferred.

The block copolymer composition according to one embodiment of the present invention may be obtained by mixing at least one kind of block copolymer obtained by the above production method or the like and, if necessary, other additives.

Examples of the other additives include various stabilizers, lubricants, processing aids, antiblocking agents, antistatic agents, antifogging agents, light resistance improvers, softeners, plasticizers, and pigments. Each additive may be added to the block copolymer solution, or may be blended with the recovered copolymer and melt-mixed.

Examples of the stabilizer include phenol-based antioxidants such as 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, octadecyl-3-(3,5-di-tert-butyl-4-hydroxyphenyl)propionate, and 2,6-di-tert-butyl-4-methylphenol; and phosphorus-based antioxidants such as trisnonylphenyl phosphite. Examples of the antiblocking agent, antistatic agent, and lubricant include fatty acid amides, ethylenebisstearamide, sorbitan monostearate, saturated fatty acid esters of aliphatic alcohols, and pentaerythritol fatty acid esters.

These additives are preferably used in a range of 5 mass% or less relative to the block copolymer.

The block copolymer composition according to one embodiment of the present invention may contain two or more block copolymers, and as a method for mixing these block copolymers, a known method may be employed.
For example, dry blending may be performed using a Henschel mixer, a ribbon blender, a super mixer, a V blender, or the like, and further, melting and pelletizing may be performed using an extruder. In one aspect, melt mixing is preferred.

In addition, a method of mixing polymer solutions (polymerization solutions) together and then removing the solvent may also be used.

### <Method for Producing Pellet>

The pellet according to one embodiment of the present invention is a granular body comprising the above block copolymer composition, and is obtained by forming the block copolymer composition or a polymer solution (polymerization solution) of the linear block copolymer A, which is a component of the block copolymer composition, into granules.

The method for producing the pellet is not particularly limited as long as the method does not impair the physical properties or the like of the block copolymer composition constituting the pellet. For example, the method may include a polymerization step and a pelletization step. The method for producing the pellet may further include a mixing step.

In the polymerization step, a monomer raw material containing a vinyl aromatic monomer and a conjugated diene monomer is polymerized to obtain a polymerization solution containing one or more kinds of the linear block copolymer A. The polymerization of the monomer raw material may be performed, for example, by the above-mentioned living anionic polymerization reaction. The polymerization solution is deactivated by adding a polymerization terminator.

In the mixing step, two or more polymerization solutions each containing one or more kinds of the linear block copolymer A are mixed to obtain a mixed solution. For example, a polymerization solution (mixed solution) newly containing three kinds of the linear block copolymer A is obtained by mixing a polymerization solution containing one kind of the linear block copolymer A and a polymerization solution containing two kinds of the linear block copolymer A.

In the pelletization step, the deactivated polymerization solution (or the mixed polymerization solution) is pelletized by a devolatilizing extrusion method.

In the devolatilizing extrusion method, the polymerization solution is concentrated by a concentrator, and then the solvent is removed by a vented extruder. In the devolatilizing extrusion, by performing pelletization under conditions such that the resin temperature T (°C) at the extruder outlet satisfies the following Formula (1), dimerization (for example, generation of a dimer of a component corresponding to the main peak due to thermal crosslinking) can be suppressed, and a low fish-eye level can be achieved. The resin temperature at the extruder outlet may be adjusted by the screw speed and the discharge rate of the extruder, the temperature of the polymerization solution fed to the extruder, and the like. $T \leq - 0.0129 \times {B}^{∧} 2 - 0.35 \times B + 257$ (1) (where B is the content (mass%) of the conjugated diene monomer unit when the total amount of the vinyl aromatic monomer unit and the conjugated diene monomer unit in the block copolymer composition is taken as 100 mass%)

### 2. Film

The film according to one embodiment of the present invention is a molded article formed from the above pellet. The film is, for example, a heat-shrinkable film, and is a heat-shrinkable film containing the block copolymer composition.
The heat-shrinkable film may be obtained by uniaxially, biaxially, or multiaxially stretching a sheet or film extruded from the pellet by a known method, such as a T-die method or a tubular method. In particular, biaxial stretching by a T-die method is preferred.

The heat-shrinkable film according to one embodiment of the present invention may be used as a single layer containing the block copolymer composition, but may be formed into a heat-shrinkable multilayer film by laminating another resin layer on at least one surface thereof. In order to obtain the heat-shrinkable multilayer film, another resin layer may be laminated on the stretched heat-shrinkable film, another resin layer may be laminated on an unstretched film obtained by forming the resin composition into a film (hereinafter, an unstretched film may be referred to as a "sheet" for distinction) and then stretched, or a multilayer sheet obtained by laminating the resin composition and another resin by multilayer extrusion molding may be stretched. As a resin used for the other resin layer, a styrene-based resin is preferred.

Examples of uniaxial stretching include a method of stretching an extruded sheet in a direction (TD) orthogonal to the extrusion direction with a tenter, and a method of stretching an extruded tubular film in the circumferential direction.

Examples of biaxial stretching include a method of stretching an extruded sheet in the extrusion direction (MD) with a roll and then stretching the sheet in a direction (TD) orthogonal to the extrusion direction with a tenter or the like, and a method of stretching an extruded tubular film simultaneously or separately in the extrusion direction and the circumferential direction.

The stretching temperature is, for example, preferably 60 to 120°C. By setting the temperature to 60°C or higher, the sheet is less likely to break during stretching, and by setting the temperature to 120°C or lower, the shrinkage properties and thickness accuracy of the obtained film tend to be favorable. The stretching ratio is not particularly limited, but is preferably 1.5 to 8 times. By setting the stretching ratio to 1.5 times or more, heat shrinkability tends to be favorable, and by setting the stretching ratio to 8 times or less, the sheet is less likely to break during stretching. When these stretched films are used as heat-shrinkable labels or packaging materials, the thermal shrinkage ratio is preferably 20% or more at 80°C. If the thermal shrinkage ratio is less than 20%, a high temperature is required during shrinkage, which is not preferred because it adversely affects the article to be covered. The thickness of the film is suitably 10 to 300 µm.

The heat-shrinkable film may be used as a heat-shrinkable label, a heat-shrinkable cap seal, or the like. In addition, the heat-shrinkable film may be used as a packaging film or the like.

### Examples

Hereinafter, the present invention will be described in more detail with reference to Examples. However, these are all illustrative and do not limit the scope of the present invention.

### [Production of Block Copolymer Compositions and Pellets]

Pellets (P-1) to (P-9) were produced by the following operations.

### <Pellet (P-1)>

### (Polymerization Step 1-1) Preparation of Block Copolymer Polymerization Solution (S-1)

(1) Into a reaction vessel, 467 kg of cyclohexane was charged.
(2) While stirring at an internal temperature of 30°C, 1380 mL of n-butyllithium (10 mass% cyclohexane solution) was added, 8.0 kg of styrene was added, and the temperature was raised to 80°C for polymerization.
(3) After the styrene was completely consumed, while maintaining the internal temperature at 80°C, a total amount of 110.0 kg of styrene and a total amount of 10.0 kg of 1,3-butadiene were added simultaneously at constant addition rates of 143.0 kg/h and 13.0 kg/h, respectively, and this state was maintained for a sufficient time after the completion of the addition.
(4) After the styrene was completely consumed, the internal temperature was set to 70°C, 22.0 kg of 1,3-butadiene was added, and the temperature was raised for polymerization.
(5) After the 1,3-butadiene was completely consumed, the internal temperature was set to 60°C, and 50.0 kg of styrene was added for polymerization.
(6) After the styrene was completely consumed, 220 g of water was added for deactivation to obtain a block copolymer polymerization solution (S-1).

### (Polymerization Step 1-2) Preparation of Block Copolymer Polymerization Solution (S-2)

(1) Into a reaction vessel, 467 kg of cyclohexane was charged.
(2) While stirring at an internal temperature of 30°C, 2480 mL of n-butyllithium (10 mass% cyclohexane solution) was added, 40.0 kg of styrene was added, and the temperature was raised to 80°C for polymerization.
(3) After the styrene was completely consumed, while maintaining the internal temperature at 80°C, a total amount of 36.0 kg of styrene and a total amount of 8.0 kg of 1,3-butadiene were added simultaneously at constant addition rates of 120.0 kg/h and 26.7 kg/h, respectively, and this state was maintained for a sufficient time after the completion of the addition.
(4) After the styrene was completely consumed, the internal temperature was set to 50°C, 66.0 kg of 1,3-butadiene was added, and the temperature was raised for polymerization.
(5) After the 1,3-butadiene was completely consumed, the internal temperature was set to 60°C, and 50.0 kg of styrene was added for polymerization.
(6) After the styrene was completely consumed, 390 g of water was added for deactivation to obtain a block copolymer polymerization solution (S-2).

### (Mixing Step 1)

The polymerization solution S-1 and the polymerization solution S-2 were mixed at a weight ratio of (S-1):(S-2) = 66.7:33.3 to obtain a mixed solution 1.

### (Pelletization Step 1)

The mixed solution 1 was pelletized with a devolatilizing extruder to obtain pellet P-1. The resin temperature at the extruder outlet was 238°C. The block copolymer composition constituting pellet P-1 contains substantially 100 mass% of the linear block copolymer. The block copolymer composition may contain a lithium salt or the like derived from the organolithium compound in addition to the linear block copolymer, but the amount is very small relative to the mass of the linear block copolymer, and the content of the linear block copolymer can be considered to be substantially 100 mass%. The same applies to other examples.

### <Pellet (P-2)>

### (Polymerization Step 2-1) Preparation of Block Copolymer Polymerization Solution (S-2)

By performing the same operations as in Polymerization Step 1-2, a block copolymer polymerization solution (S-2) was obtained.

### (Polymerization Step 2-2) Preparation of Block Copolymer Polymerization Solution (S-3)

(1) Into a reaction vessel, 467 kg of cyclohexane was charged.
(2) While stirring at an internal temperature of 30°C, 1000 mL of n-butyllithium (10 mass% cyclohexane solution) was added, 40.0 kg of styrene was added, and the temperature was raised to 80°C for polymerization.
(3) After the styrene was completely consumed, while maintaining the internal temperature at 80°C, a total amount of 102.0 kg of styrene and a total amount of 18.0 kg of 1,3-butadiene were added simultaneously at constant addition rates of 153.0 kg/h and 24.0 kg/h, respectively, and this state was maintained for a sufficient time after the completion of the addition.
(4) After the styrene was completely consumed, the internal temperature was set to 60°C, 40.0 kg of styrene was added, and the temperature was raised for polymerization.
(5) After the styrene was completely consumed, 150 g of water was added for deactivation to obtain a block copolymer polymerization solution (S-3).

### (Mixing Step 2)

The polymerization solution S-2 and the polymerization solution S-3 were mixed at a weight ratio of (S-2):(S-3) = 33.3:66.7 to obtain a mixed solution 2.

### (Pelletization Step 2)

The mixed solution 2 was pelletized with a devolatilizing extruder to obtain pellet P-2. The resin temperature at the extruder outlet was 242°C. The block copolymer composition constituting pellet P-2 contains substantially 100 mass% of the linear block copolymer.

### <Pellet (P-3)>

### (Polymerization Step 3-1) Preparation of Block Copolymer Polymerization Solution (S-4)

(1) Into a reaction vessel, 467 kg of cyclohexane was charged.
(2) While stirring at an internal temperature of 30°C, 1450 mL of n-butyllithium (10 mass% cyclohexane solution) was added, 122.0 kg of styrene was added, and the temperature was raised to 80°C for polymerization.
(3) After the styrene was completely consumed, the internal temperature was set to 50°C, 46.0 kg of styrene and 32.0 kg of 1,3-butadiene were added simultaneously in a single batch, and the temperature was raised for polymerization.
(4) After the styrene and 1,3-butadiene were completely consumed, 230 g of water was added for deactivation to obtain a block copolymer polymerization solution (S-4).

### (Polymerization Step 3-2) Preparation of Block Copolymer Polymerization Solution (S-5)

(1) Into a reaction vessel, 467 kg of cyclohexane was charged.
(2) While stirring at an internal temperature of 30°C, 1180 mL of n-butyllithium (10 mass% cyclohexane solution) was added, 32.0 kg of styrene was added, and the temperature was raised to 80°C for polymerization.
(3) After the styrene was completely consumed, the internal temperature was set to 50°C, 67.0 kg of styrene and 9.0 kg of 1,3-butadiene were added simultaneously in a single batch, and the temperature was raised for polymerization.
(4) After the styrene and 1,3-butadiene were completely consumed, the internal temperature was set to 50°C, 67.0 kg of styrene and 25.0 kg of 1,3-butadiene were added simultaneously in a single batch, and the temperature was raised for polymerization.
(5) After the styrene and 1,3-butadiene were completely consumed, 190 g of water was added for deactivation to obtain a block copolymer polymerization solution (S-5).

### (Mixing Step 3)

The polymerization solution S-4 and the polymerization solution S-5 were mixed at a weight ratio of (S-4):(S-5) = 30:70 to obtain a mixed solution 3.

### (Pelletization Step 3)

The mixed solution 3 was pelletized with a devolatilizing extruder to obtain pellet P-3. The resin temperature at the extruder outlet was 238°C. The block copolymer composition constituting pellet P-3 contains substantially 100 mass% of the linear block copolymer.

### <Pellet (P-4)>

### (Polymerization Step 4-1) Preparation of Block Copolymer Polymerization Solution (S-4)

By performing the same operations as in Polymerization Step 3-1, a block copolymer polymerization solution (S-4) was obtained.

### (Polymerization Step 4-2) Preparation of Block Copolymer Polymerization Solution (S-6)

(1) Into a reaction vessel, 467 kg of cyclohexane was charged.
(2) While stirring at an internal temperature of 30°C, 3720 mL of n-butyllithium (10 mass% cyclohexane solution) was added, 50.0 kg of styrene was added, and the temperature was raised to 80°C for polymerization.
(3) After the styrene was completely consumed, the internal temperature was set to 35°C, 60.0 kg of styrene and 90.0 kg of 1,3-butadiene were added simultaneously in a single batch, and the temperature was raised for polymerization.
(4) After the styrene and 1,3-butadiene were completely consumed, 620 g of water was added for deactivation to obtain a block copolymer polymerization solution (S-6).

### (Mixing Step 4)

The polymerization solution S-4 and the polymerization solution S-6 were mixed at a weight ratio of (S-4):(S-6) = 66.7:33.3 to obtain a mixed solution 4.

### (Pelletization Step 4)

The mixed solution 4 was pelletized with a devolatilizing extruder to obtain pellet P-4. The resin temperature at the extruder outlet was 234°C. The block copolymer composition constituting pellet P-4 contains substantially 100 mass% of the linear block copolymer.

### <Pellet (P-5)>

### (Polymerization Step 5-1) Preparation of Block Copolymer Polymerization Solution (S-1)

By performing the same operations as in Polymerization Step 1-1, a block copolymer polymerization solution (S-1) was obtained.

### (Polymerization Step 5-2) Preparation of Block Copolymer Polymerization Solution (S-2)

By performing the same operations as in Polymerization Step 1-2, a block copolymer polymerization solution (S-2) was obtained.

### (Mixing Step 5)

The polymerization solution S-1 and the polymerization solution S-2 were mixed at a weight ratio of (S-1):(S-2) = 66.7:33.3 to obtain a mixed solution 5.

### (Pelletization Step 5)

The mixed solution 5 was pelletized with a devolatilizing extruder to obtain pellet P-5. The resin temperature at the extruder outlet was 247°C. The block copolymer composition constituting pellet P-5 contains substantially 100 mass% of the linear block copolymer.

<Pellet (P-6)>

### (Polymerization Step 6-1) Preparation of Block Copolymer Polymerization Solution (S-4)

By performing the same operations as in Polymerization Step 3-1, a block copolymer polymerization solution (S-4) was obtained.

### (Polymerization Step 6-2) Preparation of Block Copolymer Polymerization Solution (S-5)

By performing the same operations as in Polymerization Step 3-2, a block copolymer polymerization solution (S-5) was obtained.

### (Mixing Step 6)

The polymerization solution S-4 and the polymerization solution S-5 were mixed at a weight ratio of (S-4):(S-5) = 30:70 to obtain a mixed solution 6.

### (Pelletization Step 6)

The mixed solution 6 was pelletized with a devolatilizing extruder to obtain pellet P-6. The resin temperature at the extruder outlet was 250°C. The block copolymer composition constituting pellet P-6 contains substantially 100 mass% of the linear block copolymer.

### <Pellet (P-7)>

### (Polymerization Step 7-1) Preparation of Block Copolymer Polymerization Solution (S-7)

(1) Into a reaction vessel, 467 kg of cyclohexane was charged.
(2) While stirring at an internal temperature of 30°C, 1560 mL of n-butyllithium (10 mass% cyclohexane solution) was added, 8.0 kg of styrene was added, and the temperature was raised to 80°C for polymerization.
(3) After the styrene was completely consumed, while maintaining the internal temperature at 80°C, a total amount of 98.0 kg of styrene and a total amount of 10.0 kg of 1,3-butadiene were added simultaneously at constant addition rates of 147.0 kg/h and 15.0 kg/h, respectively, and this state was maintained for a sufficient time after the completion of the addition.
(4) After the styrene was completely consumed, the internal temperature was set to 60°C, 50.0 kg of 1,3-butadiene was added, and the temperature was raised for polymerization.
(5) After the 1,3-butadiene was completely consumed, the internal temperature was set to 60°C, and 34.0 kg of styrene was added for polymerization.
(6) After the styrene was completely consumed, 250 g of water was added for deactivation to obtain a block copolymer polymerization solution (S-7).

### (Pelletization Step 7)

The polymerization solution S-7 was pelletized with a devolatilizing extruder to obtain pellet P-7. The resin temperature at the extruder outlet was 235°C.

The block copolymer composition constituting pellet P-7 contains substantially 100 mass% of the linear block copolymer.

### <Pellet (P-8)>

### (Polymerization Step 8-1) Preparation of Block Copolymer Polymerization Solution (S-3)

By performing the same operations as in Polymerization Step 2-2, a block copolymer polymerization solution (S-3) was obtained.

### (Pelletization Step 8)

The polymerization solution S-3 was pelletized with a devolatilizing extruder to obtain pellet P-8. The resin temperature at the extruder outlet was 245°C.

The block copolymer composition constituting pellet P-8 contains substantially 100 mass% of the linear block copolymer.

### <Pellet (P-9)>

### (Polymerization Step 9-1) Preparation of Block Copolymer Polymerization Solution (S-2)

By performing the same operations as in Polymerization Step 1-2, a block copolymer polymerization solution (S-2) was obtained.

### (Polymerization Step 9-2) Preparation of Block Copolymer Polymerization Solution (S-9)

(1) Into a reaction vessel, 467 kg of cyclohexane was charged.
(2) While stirring at an internal temperature of 30°C, 1800 mL of n-butyllithium (10 mass% cyclohexane solution) was added, 8.0 kg of styrene was added, and the temperature was raised to 80°C for polymerization.
(3) After the styrene was completely consumed, while maintaining the internal temperature at 80°C, a total amount of 110.0 kg of styrene and a total amount of 10.0 kg of 1,3-butadiene were added simultaneously at constant addition rates of 143.0 kg/h and 13.0 kg/h, respectively, and this state was maintained for a sufficient time after the completion of the addition.
(4) After the styrene was completely consumed, the internal temperature was set to 70°C, 22.0 kg of 1,3-butadiene was added, and the temperature was raised for polymerization.
(5) After the 1,3-butadiene was completely consumed, the internal temperature was set to 60°C, and 50.0 kg of styrene was added for polymerization.
(6) After the styrene was completely consumed, 290 g of water was added for deactivation to obtain a block copolymer polymerization solution (S-9).

### (Mixing Step 9)

The polymerization solution S-2 and the polymerization solution S-9 were mixed at a weight ratio of (S-2):(S-9) = 33.3:66.7 to obtain a mixed solution 9.

### (Pelletization Step 9)

The mixed solution 9 was pelletized with a devolatilizing extruder to obtain pellet P-9. The resin temperature at the extruder outlet was 237°C. The block copolymer composition constituting pellet P-9 contains substantially 100 mass% of the linear block copolymer.

### [Monomer Unit Ratio]

The contents of vinyl aromatic monomer units (styrene monomer units) and conjugated diene monomer units (1,3-butadiene monomer units) in the block copolymer composition were measured and calculated by a halogen addition method. (A1) After 0.2 g of a sample was dissolved in a solvent (such as carbon tetrachloride) capable of completely dissolving the sample, 15 mL of Wijs reagent (0.1 mol/L iodine monochloride/acetic acid solution) was added and allowed to react sufficiently. Then, 20 mL of a 4% potassium iodide solution was added, and the mixture was titrated with a 0.1 mol/L sodium thiosulfate/ethanol solution to calculate the double bond content. (A2) Based on the double bond content obtained by the method (A1), the content (rubber content) of butadiene monomer units was calculated. As for the styrene content, a value obtained by subtracting the butadiene content from the total amount of the sample was calculated as the styrene content.

The content of the conjugated diene monomer unit when the total amount of the vinyl aromatic monomer unit (styrene monomer unit) and the conjugated diene monomer unit (1,3-butadiene monomer unit) in the block copolymer composition is taken as 100 mass% is shown in Table 2.

### [GPC Measurement]

GPC measurement of the block copolymer composition was performed using the following GPC measurement apparatus and conditions. Based on the measurement results, the peak top molecular weight of each component and the area of each peak were calculated. The results are shown in Table 2.
Apparatus: HLC-8220GPC (manufactured by Tosoh Corporation)
Column: Four columns of Shodex GPC KF-404 (manufactured by Showa Denko K.K.) connected in series
Temperature: 40°C
Detector: Differential refractive index
Solvent: Tetrahydrofuran
Concentration: 2 mass%
Calibration curve: Prepared using standard polystyrene (manufactured by VARIAN).

### [Determination of Molding Conditions]

When the resin temperature at the extruder outlet was defined as T (°C), cases satisfying the following Formula (1) were rated as "A", and cases not satisfying Formula (1) were rated as "B". $T \leq - 0.0129 \times {B}^{∧} 2 - 0.35 \times B + 257$ (1) (where B is the content (mass%) of the conjugated diene monomer unit when the total amount of the vinyl aromatic monomer unit and the conjugated diene monomer unit in the block copolymer composition is taken as 100 mass%)

### [Examples 1 to 4 and Comparative Examples 1 to 5]

For each pellet, the tensile elongation and the fish-eye level during film preparation were evaluated.

### <Tensile Elongation>

In accordance with JIS K 7161, the nominal tensile strain at break of a dumbbell-shaped molded specimen injection-molded using the pellet was measured using an Autograph AG-Xplus manufactured by Shimadzu Corporation at a tensile speed of 50 mm/min, and the measured value was defined as the tensile elongation. Then, the tensile elongation was evaluated based on the following criteria. The evaluation results of each Example and Comparative Example are shown in Table 2.
A: 10% or more
B: less than 10%

### <Fish-Eye Level>

An unstretched film was produced at a temperature of 220°C using a sheet extruder equipped with a T-die, and the number of foreign substances having a size of 0.2 mm or more present in 3.3 m^2 was counted by an image recognition device, and evaluated based on the following criteria. The evaluation results of each Example and Comparative Example are shown in Table 2.
A: less than 150
B: 150 or more

In Table 2, "total area of the peak portion in a predetermined range" means "the total area of the peak portion included in a range corresponding to 1.8 to 2.2 times the peak-top molecular weight of the main peak".

### [Table 1]

**Table 1**

| Charging Order | Raw Material | Unit | Polymerization Example | | | | | | | |
|---|---|---|---|---|---|---|---|---|---|---|
| | | | S-1 | S-2 | S-3 | S-4 | S-5 | S-6 | S-7 | S-8 |
| (1) | Cyclohexane | kg | 467 | 467 | 467 | 467 | 467 | 467 | 467 | 467 |
| (2) | n-Butvllithium Solution | mL | 1380 | 2480 | 1000 | 1450 | 1180 | 3720 | 1560 | 1800 |
| (3) | Styrene | kg | 8 | 40 | 40 | 122 | 32 | 50 | 8 | 8 |
| (4) | Styrene | kg | 110 | 36 | 102 | 46 | 67 | 60 | 98 | 110 |
| | Butadiene | kg | 10 | 8 | 18 | 32 | 9 | 90 | 10 | 10 |
| (5) | Styrene | kg | - | - | - | - | 67 | - | - | - |
| | Butadiene | kg | 22 | 66 | - | - | 25 | - | 50 | 22 |
| (6) | Styrene | kg | 50 | 50 | 40 | - | - | - | 34 | 50 |
| Structure of Block Copolymer | | - | S1-(S/B)-B-S2 | S1-(S/B)-B-S2 | S1-(S/B)-S2 | S-(S/B) | S-(S/B)1-(S/B)2 | S-(S/B) | S1-(S/B)-B-S2 | S1-(S/B)-B-S2 |
| Polymerization Method for Copolymer Block | | - | Random | Random | Random | Tapered | Tapered | Tapered | Random | Random |
| Conjugated Diene Content of Block Copolym | | mass% | 16 | 37 | 9 | 16 | 17 | 45 | 30 | 16 |

**[Table 2]**

| Table 2 | | | Example | | | | Comparative Example | | | | |
|---|---|---|---|---|---|---|---|---|---|---|---|
| | | | 1 | 2 | 3 | 4 | 1 | 2 | 3 | 4 | 5 |
| | | | P-1 | P-2 | P-3 | P-4 | P-5 | P-6 | P-7 | P-8 | P-9 |
| Blending Formulation of Polymerization Examples | S-1 | mass% | 66.7 | | | | 66.7 | | | | |
| | S-2 | mass% | 33.3 | 33.3 | | | 33.3 | | | | 33.3 |
| | S-3 | mass% | | 66.7 | | | | | | 100 | |
| | S-4 | mass% | | | 30 | 66.7 | | 30 | | | |
| | S-5 | mass% | | | 70 | | | 70 | | | |
| | S-6 | mass% | | | | 33.3 | | | | | |
| | S-7 | mass% | | | | | | | 100 | | |
| | S-8 | mass% | | | | | | | | | 66.7 |
| Composition of Block Copolymer Composition | Content of Linear Block Copolymer | mass% | 100 | 100 | 100 | 100 | 100 | 100 | 100 | 100 | 100 |
| | Content of Conjugated Diene Monomer Unit | mass% | 22.3 | 18.3 | 16.7 | 25.0 | 22.3 | 16.7 | 30.0 | 9.0 | 22.3 |
| Molecular Weight Characteristics | Peak-Top Molecular Weight of Main Peak | ×10⁴ | 17.5 | 24.3 | 20.6 | 16.7 | 17.5 | 19.0 | 16.6 | 24.3 | 13.5 |
| | Total Area of Peak Portion in Predetermined Range | % | 3.5 | 1.6 | 1.9 | 2.4 | 7.3 | 6.0 | 6.4 | 1.8 | 4.6 |
| Molding Conditions | Resin Temperature During Pellet Molding | °C | 238 | 242 | 238 | 234 | 247 | 250 | 235 | 245 | 237 |
| | Determination According to Formula (1) | - | A | A | A | A | B | B | B | A | A |
| Evaluation | Fish-Eve Level | - | A | A | A | A | B | B | B | A | A |
| | Tensile Elongation | - | A | A | A | A | A | A | A | B | B |

## Claims

1. A pellet comprising a block copolymer composition, wherein:
the block copolymer composition contains 95 mass% or more of a linear block copolymer mainly comprising a vinyl aromatic monomer unit and a conjugated diene monomer unit;
a content of the conjugated diene monomer unit is 12 to 27 mass% when the total amount of the vinyl aromatic monomer unit and the conjugated diene monomer unit in the block copolymer composition is taken as 100 mass%;
in gel permeation chromatography measurement of the block copolymer composition in terms of polystyrene-equivalent molecular weight, a main peak is defined as a peak having the highest peak-top molecular weight among peaks each having an area ratio of 20% or more relative to the total peak area;
the peak-top molecular weight of the main peak is 150,000 to 300,000; and
a total area of a peak portion included in a range corresponding to a molecular weight of 1.8 times to 2.2 times the peak-top molecular weight of the main peak is less than 5% of an area of the main peak.

2. The pellet of claim 1, wherein the block copolymer composition contains two or more kinds of the linear block copolymer.

3. A method for producing the pellet of claim 1 or 2, comprising:
a polymerization step; and
a pelletization step,
wherein
in the polymerization step, a monomer raw material containing a vinyl aromatic monomer and a conjugated diene monomer is polymerized to obtain a polymerization solution containing the linear block copolymer;
in the pelletization step, the polymerization solution is pelletized by a devolatilizing extrusion method; and
when a resin temperature at an extruder outlet in the pelletization step is defined as T (°C), T satisfies Formula (1): $T \leq - 0.0129 \times {B}^{∧} 2 - 0.35 \times B + 257$ (1) where B is the content (mass%) of the conjugated diene monomer unit when the total amount of the vinyl aromatic monomer unit and the conjugated diene monomer unit in the block copolymer composition is taken as 100 mass%.

4. A film which is a molded article formed from a raw material containing the pellet of claim 1 or 2.
